# FASCICULE DE BREVET EUROPEEN

(11) **EP 3 158 782 B1**
(45) Date de publication et mention de la délivrance du brevet: **08.05.2019**
(21) Numéro de dépôt: 15736554.5
(22) Date de dépôt: 16.06.2015
(51) Int. Cl.: H04W 8/26, H04W 4/80

(54) **PROCÉDÉ D'ACTIVATION D'UNE CARTE D'ABONNÉ DE TYPE CARTE SIM**
VERFAHREN ZUR AKTIVIERUNG EINER TEILNEHMERKARTE WIE EINER SIM-KARTE
METHOD FOR ACTIVATING A SUBSCRIBER CARD SUCH AS A SIM CARD

(30) Priorité: 20.06.2014 FR 1455741
(43) Date de publication de la demande: 26.04.2017
(73) Titulaire: Orange, 75015 Paris (FR)
(72) Inventeur: ARSLAN, Yunus, F-14000 Caen (FR); DE LA FOREST DIVONNE, Aymeric, F-14650 Carpiquet (FR)
(86) Numéro de dépôt international: PCT/FR2015/051596
(87) Numéro de publication internationale: WO 2015/193609

(56) Documents cités:
- WO-A1-2013/093574
- US-A1- 2002 177 410
- US-A1- 2010 210 305

## Description

### Domaine technique

Le domaine de l'invention est celui des radiocommunications et plus particulièrement des terminaux de radiocommunication, tels que les radiotéléphones.

L'invention se rapporte à un procédé d'activation d'une carte d'abonné de type carte SIM (sigle anglo-saxon de « Subscriber Identity Module » ou « module d'identité d'abonné » en français), carte USIM (sigle anglo-saxon de « Universal Subscriber Identity Module »), ou cartes similaires.

### Etat de la technique

Par souci de simplification de la description, on se limitera, dans toute la suite de ce document, à décrire le cas particulier où le terminal de radiocommunication est un terminal GSM comprenant une carte SIM. L'homme du métier étendra sans difficulté cet enseignement à tout autre type de terminal de radiocommunication et cartes SIM ayant un fonctionnement similaire. Classiquement, un terminal de radiocommunication GSM ne peut accéder aux services du réseau GSM sans carte SIM. En effet, une carte SIM est un module comprenant toutes les données concernant l'abonné, à savoir un numéro d'identité IMSI (pour « International Mobile Subscriber Identity » en anglais), une clé d'authentification Ki, ainsi que des algorithmes associés d'authentification de l'abonné par le réseau GSM.

Un changement de carte SIM est possible par exemple suite à un changement de terminal.

Une activation de la nouvelle carte SIM nécessite des échanges entre les cartes et l'opérateur de télécommunication qui gère les cartes. Ces échanges ont pour but de modifier une correspondance entre l'identifiant IMSI de la carte et un numéro MSISDN (sigle anglo saxon de « Mobile Station ISDN Number ») attribué à la carte.

On considère dans la suite que le terminal qui inclut la carte SIM à activer correspond au premier terminal et à la première carte SIM ; et que le terminal qui inclue la carte SIM déjà activée correspond au second terminal et à la seconde carte SIM. Considérons aussi que la première carte comprend un identifiant IMSI1 et la deuxième carte un identifiant IMSI2.

Les modifications à apporter visées ci-dessus consistent à modifier une correspondance entre un identifiant IMSI et un numéro MSISDN de telle manière que, suite à la modification, le premier identifiant IMSI1 corresponde au numéro MSISDN en lieu et place du second identifiant IMS2.

Les principales étapes liées à l'activation de la première carte SIM sont les suivantes :
Lors d'une première étape, l'utilisateur compose sur le second terminal un numéro d'appel d'un serveur vocal ; le second terminal étant à ce stade le seul terminal parmi les deux terminaux considérés à pouvoir communiquer avec le réseau.

Une fois la communication établie entre le second terminal et le serveur, ce dernier requiert une saisie du premier identifiant IMSI1 qui correspond à la première carte SIM à activer.

L'utilisateur compose l'identifiant IMSI1, par exemple sur le clavier du second terminal, et commande l'envoi de cet identifiant à destination du serveur.

A réception du code, le serveur confirme la réception du code et réalise la modification de la manière indiquée ci-dessus.

Suite à la confirmation, dans notre exemple, l'utilisateur éteint le second terminal ; et allume ensuite le premier terminal ; en parallèle, l'opérateur remplace l'IMSI2 par l'IMSI1 de manière à ce que l'IMSI1 corresponde au numéro MSISDN. A ce stade la première carte SIM1 est activée car une correspondance entre son identifiant IMS1 et le MSISDN est effective sur le réseau ; cette première carte est donc utilisable par le premier terminal TRM1 pour accéder au réseau.

Les opérations réalisées ci-dessus par l'utilisateur sont sources d'erreurs en particulier pour l'utilisateur non technophile. De plus, un tiers malveillant pourrait se faire passer pour une carte à activer à l'insu de l'utilisateur du second terminal. Le document US 2002/0177410 A1 décrit deux terminaux avec deux cartes SIM, la première carte SIM étant active, la second inactive, les deux terminaux pouvant communiquer directement entre eux par Bluetooth. Lorsque les terminaux sont en communication directe, le terminal avec la carte SIM inactive s'active.

Le document US 2010/210305 A1 décrit l'activation d'une carte SIM par un serveur dans un réseau cellulaire.

Le document WO 2013/093574 A1 décrit une pluralité de terminaux avec différentes cartes SIM associées à un abonné unique. Les cartes SIM sont activées successivement à l'aide d'un agenda prédéfini.

L'invention vient améliorer la situation.

### L'invention

L'invention se rapporte à un procédé d'activation d'une carte d'abonné tel que défini dans la revendication 1.

Le deuxième terminal joue un rôle d'intermédiaire de confiance entre la première carte à activer et l'opérateur. Il en résulte à la fois une liaison sécurisée entre les deux terminaux du fait de l'utilisation d'un réseau de courte portée ; et une liaison sécurisée entre le second terminal et l'opérateur du fait de la relation de confiance qu'entretient l'opérateur avec un terminal dans lequel est insérée une carte d'abonné qu'il gère et qu'il peut authentifier

L'automatisation des échanges et l'allègement des tâches à effectuer pour l'activation de la première carte sur le premier réseau simplifient le procédé d'activation. L'expérience utilisateur ne peut donc être que positive.

Selon un mode de mise en oeuvre particulier de l'invention, suite au couplage entre la première carte et le premier terminal, le premier terminal émet, par exemple en tant que demande d'activation ou en complément de la demande d'activation, un signal représentatif de l'existence d'une carte SIM inactive. Un module présent sur le premier terminal est apte à détecter le couplage et à requérir ensuite l'émission du signal. Cela évite au premier terminal d'émettre un signal sans que cela soit nécessaire ; il en résulte une consommation électrique moins importante. En d'autres mots, le premier terminal n'émet ce signal que s'il est couplé à une carte inactive.

Grâce à l'invention, l'utilisateur n'est plus contraint de composer le numéro d'un serveur pour requérir une activation. En effet, l'émission d'une information représentative de l'existence d'une carte inactive déclenche automatiquement une série d'actions à savoir l'envoi d'une demande d'activation à destination du second terminal, et l'établissement automatique d'une communication entre le second terminal et le serveur en vue d'une activation.

Selon un mode de mise en oeuvre particulier de l'invention, l'étape de transmission de l'identifiant vers le deuxième terminal est précédée d'une étape de réception depuis le deuxième terminal d'un accord pour la réalisation de validation de l'activation. Cette validation a pour origine par exemple une action de l'utilisateur sur le second terminal; cette action étant représentative d'un accord de validation de l'activation. L'utilisateur du premier terminal peut aussi confirmer son souhait de réaliser l'activation en transmettant un message de confirmation. Une activation ne s'effectue donc pas à l'insu de l'utilisateur.

Dans notre exemple, la seconde carte stocke un identifiant, dit second identifiant. Dans cette configuration, selon un second mode de mise en oeuvre particulier de l'invention, qui pourra être mis en oeuvre alternativement ou cumulativement avec le précédent, les identifiants de la première et de la seconde carte sont vérifiés avant activation de la première carte. Cela permet d'assurer la mise en oeuvre du procédé d'activation entre cartes autorisées. La vérification est effectuée par exemple par un module de vérification du réseau d'un opérateur gestionnaire des cartes d'abonné. Le lieu de la vérification est donc sécurisé parce que exécuté par une entité, à savoir l'opérateur, qui gère l'activation sur le réseau.

Selon encore un autre mode de mise en oeuvre particulier de l'invention, qui pourra être mis en oeuvre alternativement ou cumulativement avec les précédents, suite à la réception de la demande d'activation par le second terminal, le second terminal empêche une utilisation de la seconde carte pour l'accès au réseau. Cela permet à l'opérateur à la fois de ne pas recevoir de communication de la part des cartes concernées par une activation ; et de mettre à jour sa base de données avec la nouvelle correspondance entre le premier identifiant IMS1 et un numéro MSISDN2. Empêcher l'utilisation de la seconde carte peut consister en une fourniture d'une information à restituer sur le second terminal. L'information peut être un message afficher sur un écran du second terminal ; message indiquant par exemple que le terminal ne doit pas être utilisé pendant une plage temporelle donnée. Empêcher l'utilisation peut aussi consister en l'émission d'une commande apte à mettre hors tension le premier terminal. La description qui suite donnera d'autres variantes possibles.

Selon un aspect matériel, l'invention concerne également, en tant que produit obtenu directement par sa mise en oeuvre, un signal porteur d'une demande d'activation généré lors de la mise en oeuvre d'un procédé conforme à la description qui précède.

Selon un autre de ses aspects matériels, l'invention concerne également un terminal, dit premier terminal, tel que défini dans la revendication 10.

Selon un autre aspect matériel, l'invention concerne également un programme d'ordinateur comprenant des instructions de code qui, lorsqu'il est exécuté par un processeur, réalise les étapes du procédé d'activation défini ci-dessus. Un tel programme peut utiliser n'importe quel langage de programmation. Il peut être téléchargé depuis un réseau de communication et/ou enregistré sur un support lisible par ordinateur.

Selon un autre aspect matériel, l'invention concerne également un support de données sur lequel a été mémorisée au moins une série d'instructions de code de programme pour l'exécution du procédé tel que défini ci-dessus.

Selon un autre aspect fonctionnel, l'invention concerne un procédé de gestion d'une activation d'une carte d'abonné, dite première carte couplée à, un premier terminal, dit premier terminal, par un second terminal couplé à une seconde carte d'abonné, les terminaux étant aptes à communiquer avec un premier réseau , un terminal pouvant communiquer avec ce premier réseau que si la carte associée est active, la communication entre les terminaux pouvant s'effectuer en outre par l'intermédiaire d'un second réseau de courte portée, caractérisé en ce qu'il comprend au niveau du second terminal, lorsqu'une communication est possible entre les deux terminaux,
a. une étape de réception d'une première demande d'activation issue du premier terminal incluant l'identifiant de la première carte,
b. une étape de transmission d'une seconde demande d'activation de la première carte, à destination du premier réseau, pour l'activation de la première carte sur premier réseau.

Selon un autre aspect matériel, l'invention concerne un programme d'ordinateur apte à être mis en oeuvre sur un terminal, le programme comprenant des instructions de code qui, lorsqu'il est exécuté par un processeur, réalise les étapes du procédé de communication définies ci-dessus.

Selon un autre aspect matériel, l'invention concerne un terminal, dit second terminal, apte à être couplé à un carte d'abonné, dite seconde carte, le terminal comprenant un module de communication apte à communiquer avec un premier réseau, et avec un autre terminal, dit premier terminal, par l'intermédiaire d'un second réseau de courte portée (RCP), ledit premier terminal étant apte à être couplé à une carte d'abonné (SIM1) inactive, un terminal pouvant communiquer avec le premier réseau que si la carte associée est active,, caractérisé en ce qu'il comprend,
a. Un module de réception apte à recevoir depuis le premier réseau une première demande d'activation issue du premier terminal incluant l'identifiant de la première carte,
b. Un module de transmission apte à transmettre une seconde demande d'activation de la première carte, à destination du premier réseau, pour l'activation de la première carte.

Selon un mode de mise en oeuvre particulier de l'invention, le terminal un module pour établir une communication avec un serveur suite à la réception d'une demande d'activation. La communication peut être faite directement suite à la réception de la demande d'activation ou indirectement par exemple après réception d'une confirmation du souhait d'activer la première carte reçue depuis le premier terminal.

Enfin, selon un autre aspect matériel, l'invention se rapport à un support de données sur lequel a été mémorisée au moins une série d'instructions de code de programme pour l'exécution d'un procédé de communication défini ci-dessus.

L'invention sera mieux comprise à la lecture de la description qui suit, donnée à titre d'exemple et faite en référence aux dessins annexés sur lesquels :
La figure 1 représente un système informatique sur lequel est illustré un exemple de réalisation de l'invention.
Les figures 2 et 3 représentent les circuits des équipements impliqués dans le procédé de l'invention.
La figure 4 est une vue schématique des échanges entre terminaux, cartes SIM et opérateur, illustrant un mode de réalisation de l'invention.
La figure 5 est une vue schématique de variantes possibles au mode de réalisation décrit en référence à la figure 4.

### Description détaillée d'un exemple de réalisation illustrant l'invention

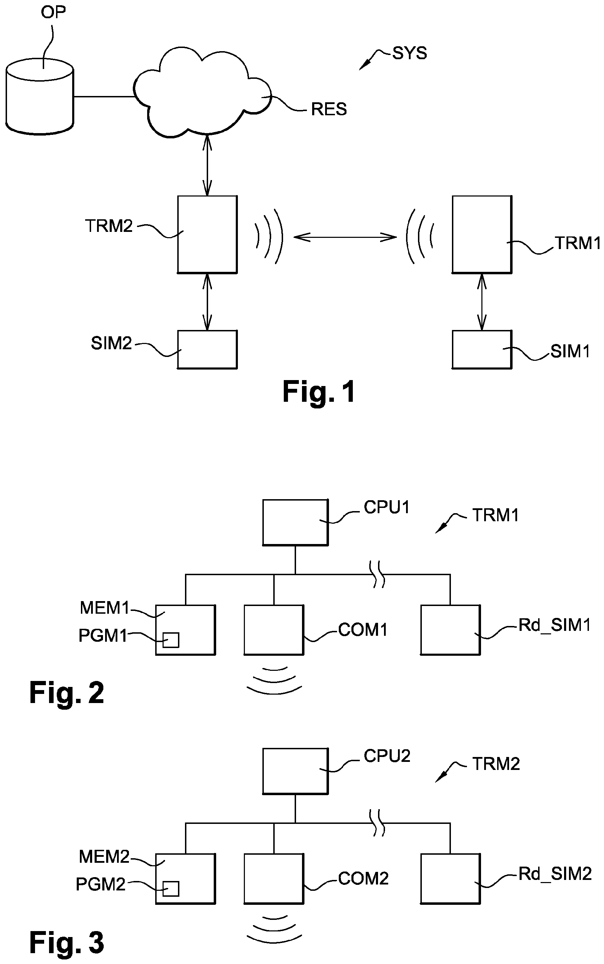

La figure 1 représente un système SYS comprenant des terminaux TRM1 et TRM2 couplés à des cartes d'abonné respectives SIM1 et SIM2.

Les terminaux communiquent entre eux via un ou plusieurs réseaux RES gérés par des opérateurs respectifs. Dans notre exemple, afin de simplifier l'exposé de l'invention, un seul opérateur OP gère les cartes SIM1 et SIM2. Des opérateurs différents pourraient également gérés les cartes ; dans ce cas, une mutualisation des données relatives aux abonnés est nécessaire pour la mise en oeuvre de l'invention.

Rappelons qu'une carte SIM est une carte à puce fabriquée par assemblage d'un circuit intégré dans un module qui est relié à une interface de communication. Ce module est généralement encarté, c'est à dire placé dans une cavité ménagée dans le corps de carte. Le circuit intégré formant la puce de la carte à puce est un composant sécurisé apte à communiquer uniquement avec un lecteur de carte correspondant. L'interface de communication peut être une interface à contact. Dans ce cas, la carte comporte généralement des métallisations affleurant la surface de la carte, disposées à un endroit précis du corps de carte. Ces métallisations sont destinées à venir au contact d'une tête de lecture d'un lecteur en vue d'une transmission électrique de données. L'interface de communication peut aussi être une interface sans contact. Dans ce cas, la carte comporte généralement une antenne permettant d'échanger des informations par radiofréquence avec un lecteur extérieur. Ainsi, la carte à puce communique avec un lecteur associé lorsque la carte à puce est amenée à proximité du lecteur. Plus précisément, le lecteur transmet des signaux grâce à son antenne et lorsque la carte à puce est située dans un rayon de détection du lecteur, son antenne détecte les signaux émis par le lecteur. Des données peuvent alors être transmises entre la carte à puce et le lecteur sans contact.

Il existe également des cartes hybrides qui comportent à la fois des métallisations affleurant la surface de la carte et une antenne dans le corps de carte. Ce type de carte peut donc échanger des données avec l'extérieur soit en mode contact, soit en mode sans contact.

Dans notre exemple, l'interface de communication est une interface à contact.

La carte SIM stocke des données, notamment des données d'identité qui sont nécessaires pour communiquer avec le réseau RES. Ces données incluent notamment un identifiant IMSI (International Mobile Subscriber Identity) ; cet identifiant permet le routage des appels téléphoniques, des messages (SMS/MMS) et les données dans le réseau. Cet identifiant est stocké dans la carte SIM. Il est également stocké dans un registre HLR (Home Location Register) de l'opérateur. D'une manière générale, cet identifiant n'est pas modifié tant que l'abonné reste chez le même opérateur. Cet identifiant se décompose en 3 groupes de codes à savoir un code MCC Mobile Country Code, un code MNC (Mobile Network Code) et un nombre MSIN (Mobile Subscriber Identification Number). Par exemple, MCC = 208 pour la France métropolitaine, MNC = 01 pour l'opérateur concerné, MSIN = numéro à 10 chiffres en France, mais qui n'a rien à voir avec le numéro d'appel.

La carte contient d'autres données qui ne seront pas décrites ci-après car sans intérêt pour l'exposé de l'invention.

A un identifiant IMSI correspond un numéro MSISDN (Mobile Station ISDN Number). Ce dernier est le numéro d'appel au format international (Ex : 33612345678). Ce numéro permet le routage des appels et des messages (SMS/MMS) entrants jusqu'au registre HLR de l'opérateur concerné. Une fois que l'appel ou le message entrant a été routé jusqu'au HLR de l'opérateur grâce au numéro MSISDN, l'IMSI prend le relais pour faire parvenir l'appel jusqu'au terminal selon le lieu où vous le terminal se situe sur le réseau.

Cet identifiant IMSI se décompose en trois groupes de code, à savoir un code « Country Code », un code « National Destination Code » et un nombre « Subscriber Number ». Par exemple, un MSISDN a la forme suivante : 33612345678 qui se décompose en 3 groupes de données à avoir 33 (code pays de la France), 612 (plage de numéros attribués initialement à l'opérateur) et 345678.

En référence aux figures 2 et 3, les terminaux TRM1 et TRM2 sont équipés de processeurs CPU1 et CPU2 respectivement.

Les terminaux sont en outre équipés
- de lecteurs de cartes Rd-SIM1 et Rd-SIM2,
- De mémoires MEM1 et MEM2 incluant des modules illustrés au moyen de programmes d'ordinateurs PGM1 et PGM2 pour la mise en oeuvre de l'invention,
- de modules de communications sans fil de courte portée COM1 et COM2, respectivement.

Un réseau de courte portée se rapporte ici à un réseau ayant une couverture limitée en distance. Dans ce contexte, grâce à leurs modules de communication respectifs, les terminaux peuvent communiquer des données en deçà d'une distance donnée. Idéalement, ce de manière à garantir un lien sécurisé entre les deux terminaux, La couverture de ce réseau courte portée est choisie de telle sorte qu'une communication possible entre deux terminaux par le biais de ce réseau sera le témoin d'une proximité entre les deux terminaux en question et implicitement une proximité de l'utilisateur vis-à-vis des deux terminaux. Ce réseau de courte portée est par exemple un réseau RFiD (Radio Frequency Identification), un réseau Bluetooth. Ce réseau peut aussi être constitué par un générateur de code visuel et d'un dispositif de prise de vue capable de prendre une vue du code et d'en extraire une information. Un dispositif de prise de son, ou un émetteur de lumière peuvent aussi être utilisés comme émetteur de signaux, le code étant émis sous la forme d'un son ou de lumière, respectivement.

Rappelons que la première carte SIM1 est inactive et que le but recherché est son activation. Pour l'activation de la première carte SIM1, le deuxième terminal TRM2 joue le rôle de relais entre le premier terminal et l'opérateur du réseau qui va gérer l'activation.

Le premier programme PGM1 et le second PGM2 vont coopérer de manière à atteindre le but visé.

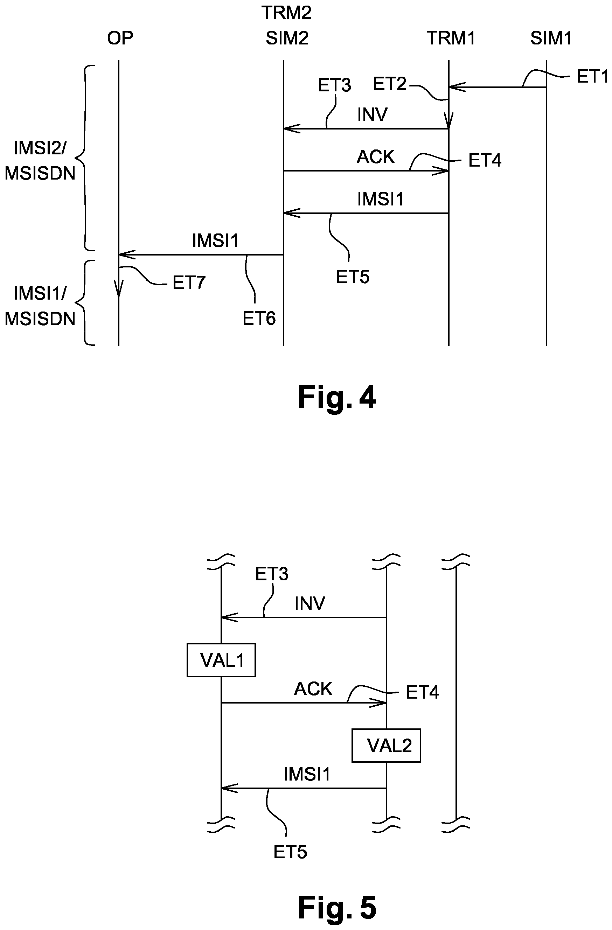

La figure 4 est un algorithme illustrant une suite d'étapes d'un mode de réalisation. Les étapes de ce mode de réalisation sont les suivantes :
Lors d'une première étape d'insertion ET1, la première carte SIM1 est insérée dans le premier terminal TRM1.

Dans notre exemple, lors d'une deuxième étape ET2, suite à l'insertion, une commande est transmise au premier programme PGM1. La commande a pour fonction l'exécution du premier programme PGM1 par le premier processeur CPU1. Cette étape est optionnelle car le premier programme peut être actif en permanence et donc prêt à recevoir une commande.

Suite à son exécution, dans notre exemple, le premier programme PGM1 émet un signal sur le réseau de courte portée de manière à notifier aux terminaux se trouvant dans le champ radio du réseau de courte portée qu'une carte inactive est présente. Dans notre exemple, ce signal cessera à l'issue de l'activation de la première carte SIM ; cela permet au terminal d'éviter d'émettre un signal de notification de ce type alors que la carte à laquelle il est couplé est activée.

Dans notre exemple, on suppose que seul le deuxième terminal TRM2 se trouve dans le rayon de couverture du premier terminal TRM1.

Lors d'une troisième étape ultérieure ET3, le second terminal TRM2 reçoit le signal émis par le premier terminal TRM1.

A réception du signal, le second processeur CPU2 exécute le second programme PGM2. Dans notre exemple, suite à la réception du signal, le deuxième terminal TRM2 émet à destination du premier terminal un signal d'acquittement ACK lors d'une quatrième étape ET4. Ce signal a pour fonction d'informer le premier terminal TRM1 de la présence du second terminal TRM2 dans le champ radio du premier terminal TRM1.

Suite à la réception du signal d'acquittement ACK, lors d'une cinquième étape ET5, le premier terminal TRM1 transmet au second terminal TRM2 un signal de demande d'activation, dite première demande d'activation, incluant dans notre exemple le code IMSI1 ou plus généralement un code représentatif de l'identifiant IMSI1 qui pourrait être interprétée pour l'obtention du code IMSI1.

Dans notre exemple, le premier terminal TRM1 récupère le premier identifiant IMSI1 par exemple par le biais d'une application Simtoolkit, connue de l'homme du métier, présente dans la carte SIM1. Cette application Simtoolkit permet une communication entre le terminal et la carte. On se reportera au standard ETSI suivant (3 GPP TS 51.014 (ETSI GSM 11.14) pour les cartes ou 3 GPP TS 31.111) pour plus de détails. Le premier terminal TRM1 peut aussi récupérer le premier identifiant IMS1 via une interface API (sigle anglo-saxon de « Application Program Interface ») du système d'exploitation du premier terminal. Plus généralement, la méthode d'obtention de l'identifiant IMS1 est quelconque.

Lors d'une sixième étape ET6, le deuxième terminal TRM2 transmet à destination de l'opérateur via le réseau RES une nouvelle demande d'activation, dite deuxième demande, de la première carte. La demande inclut le code IMS1 de la première carte SIM1.

L'opérateur OP reçoit ensuite la demande lors d'une septième étape ET7. L'opérateur réalise alors une association entre le code IMSI1 et l'identifiant de la deuxième carte SIM2 de manière à activer la première carte SIM1.

La deuxième carte SIM2 peut ensuite être désactivée par l'opérateur ; pour cela l'opérateur supprime la correspondance entre l'identifiant IMSI2 de la deuxième carte SIM2 et le numéro MSISDN.

L'exemple de réalisation décrit ci-dessus peut faire l'objet de plusieurs variantes.

Selon une première variante, le deuxième terminal TRM2 transmet également son propre identifiant IMSI2 à l'opérateur. Ceci permet à l'opérateur de s'assurer que les identifiant IMSI1 et IMSI2 reçus correspondent à des cartes d'un même utilisateur. Pour cela, l'opérateur a une connaissance préalable des abonnés à qui les cartes SIM sont délivrées. La connaissance en question peut être liée aux données du contrat d'abonnement.

Selon une deuxième variante, en référence à la figure 5 (représentant une partie de la figure 4 à laquelle sont ajoutées deux étapes VAL1 et VAL2) la cinquième étape ET5 est précédée d'une étape de validation VAL2 de la transmission du message d'activation. Cela permet à l'utilisateur de s'assurer que le terminal destinataire de la demande est bien le second terminal TRM2 et non un autre terminal.

De la même façon que dans la variante précédente, toujours en référence à la figure 5, la transmission de l'acquittement à la troisième étape ET3 peut être conditionnée à une validation VAL1 faite par l'utilisateur du second terminal. Cette validation confirme l'accord de l'utilisateur du second terminal pour la réalisation de l'activation.

D'une manière générale, toutes données à émettre depuis une carte peut être précédées d'une validation par le terminal émetteur.

Selon une autre variante possible, les programmes PGM1 et PGM2 sont installés dans les cartes SIM1 et SIM2, respectivement. En effet, les cartes SIM actuelles, comme indiqué précédemment, peuvent être dotées d'un module de communication sans contact. Les échanges décrits ci-dessus entre la troisième étape et la cinquième étape ET5 s'effectuent ainsi entre cartes directement. La première étape ET1 décrite précédemment est quant à elle modifiée. Dans la présente configuration, l'insertion de la première carte dans le premier terminal déclenche l'exécution du premier programme installé dans la première carte SIM1. Les autres étapes décrites (ET6 et ET7) sont les mêmes que celles décrites en référence à la figure 4.

Le basculement de correspondance entre IMSI et MSISDN requiert une phase de continuité de service au cours de laquelle un seul terminal peut utiliser le réseau. Ainsi, selon une autre variante, suite à la réception de la demande d'activation par le second terminal, le second terminal (sous-entendu le second programme) notifie la demande d'activation en cours sur son écran de manière à ce que l'utilisateur n'utilise pas le second terminal pendant une durée donnée. La notification peut être un message indiquant que le second terminal ne doit pas être utilisé pendant une plage temporelle donnée ; à charge pour l'utilisateur d'appliquer la consigne.

Une autre façon d'assurer une qualité de service pendant le basculement, est d'émettre une commande apte à mettre hors tension le premier et/ou le second terminal TRM1. Cette mise hors tension est éventuellement suivie d'une commande apte à remettre sous tension le premier terminal après une durée donnée qui correspond idéalement au moins à durée nécessaire au basculement de correspondances par l'opérateur et donc à l'activation de la première carte SIM1. Pour ce faire, le premier terminal est par exemple équipé d'une horloge (timer) apte à redémarrer le premier terminal après une durée donnée.

A noter que, dans le présent texte, le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

## Revendications

1. Procédé d'activation d'une carte d'abonné (SIM1), dite première carte, couplée à un premier terminal (TRM1) apte à communiquer avec un second terminal (TRM2) couplé à une seconde carte d'abonné (SIM2) active, les terminaux étant aptes à communiquer avec un premier réseau (RES), un terminal pouvant communiquer avec ce premier réseau que si la carte associée est active, les terminaux pouvant en outre communiquer entre eux via un second réseau de courte portée (RCP), **caractérisé en ce qu'**il comprend au niveau du premier terminal, lorsqu'une communication est possible entre les deux terminaux via le second réseau, une étape de transmission (ET5) à destination du second terminal via le deuxième réseau d'une demande d'activation requérant au deuxième terminal une activation de la première carte via le premier réseau, la demande incluant l'identifiant de la première carte, la première et la deuxième carte d'abonné étant associées au même abonné et étant identifiées par un même identifiant d'appel (MSISDN) au sein du premier réseau de communication.

2. Procédé d'activation selon la revendication 1, **caractérisé en ce que**, suite au couplage entre la première carte et le premier terminal, le premier terminal émet un signal représentatif de l'existence d'une carte d'abonné inactive.

3. Procédé d'activation selon la revendication 1, **caractérisé en ce que** l'étape de transmission (ET5) de l'identifiant (IMSI1) vers le deuxième terminal est précédée d'une étape de réception depuis le deuxième terminal d'un accord pour la réalisation de la validation de l'activation.

4. Procédé d'activation selon la revendication 1, **caractérisé en ce que** la seconde carte (SIM2) stocke un identifiant (IMSI2), dit second identifiant, **en ce que** les identifiants de la première et de la seconde carte sont vérifiés avant activation de la première carte.

5. Procédé d'activation selon la revendication 4, **caractérisé en ce que** la vérification est effectuée par un module de vérification du réseau d'un opérateur (OP) gestionnaire des cartes d'abonné (SIM1,SIM2).

6. Procédé selon la revendication 1, **caractérisé en ce que**, suite à la réception de la demande d'activation par le second terminal, le second terminal empêche une utilisation de la seconde carte (SIM2).

7. programme d'ordinateur (PGM1) apte à être mis en oeuvre sur un terminal, le programme comprenant des instructions de code qui, lorsqu'il est exécuté par un processeur, réalise les étapes du procédé définies dans la revendication 1.

8. Support de données sur lequel a été mémorisée au moins une série d'instructions de code de programme pour l'exécution d'un procédé selon la revendication 1.

9. Terminal (TRM1), dit premier terminal, apte à être couplé à une carte d'abonné (SIM1) inactive, dite première carte, le terminal étant apte à communiquer avec un second terminal couplé à une seconde carte d'abonné (SIM2) active, les terminaux étant aptes à communiquer avec un premier réseau (RES), un terminal pouvant communiquer avec ce premier réseau que si la carte associée est active, la communication entre les terminaux pouvant s'effectuer par l'intermédiaire d'un second réseau de courte portée (RCP), **caractérisé en ce que** le terminal comprend un module de transmission apte à transmettre, lorsqu'une communication est possible entre les terminaux, une demande d'activation de la première carte via le second réseau, la demande incluant l'identifiant de la première carte, la demande d'activation requérant au deuxième terminal une activation de la première carte via le premier réseau, la première et la deuxième carte d'abonné étant associées au même abonné et étant identifiées par un même identifiant d'appel (MSISDN) au sein du premier réseau de communication .

10. Procédé de gestion d'une activation d'une carte d'abonné (SIM1), dite première carte apte à être couplée à un premier terminal (TRM1), dit premier terminal, par un second terminal (TRM2) apte à être couplé à une seconde carte d'abonné (SIM2), les terminaux étant aptes à communiquer avec un premier réseau (RES), un terminal pouvant communiquer avec ce premier réseau que si la carte associée est active, la communication entre les terminaux pouvant s'effectuer en outre par l'intermédiaire d'un second réseau de courte portée (RCP), **caractérisé en ce qu'**il comprend au niveau du second terminal, lorsqu'une communication est possible entre les deux terminaux,
a. une étape de réception depuis le second réseau d'une première demande d'activation issue du premier terminal incluant l'identifiant de la première carte,
b. une étape de transmission d'une seconde demande d'activation de la première carte, à destination du premier réseau, pour l'activation de la première carte, la première et la deuxième carte d'abonné étant associées au même abonné et étant identifiées par un même identifiant d'appel (MSISDN) au sein du premier réseau de communication.

11. programme d'ordinateur (PGM2) apte à être mis en oeuvre sur un terminal, le programme comprenant des instructions de code qui, lorsqu'il est exécuté par un processeur, réalise les étapes du procédé définies dans la revendication 10.

12. Terminal (TRM2), dit second terminal, apte à être couplé à un carte d'abonné, dite seconde carte, le terminal comprenant un module de communication apte à communiquer avec un premier réseau (RES), et avec un autre terminal, dit premier terminal, par l'intermédiaire d'un second réseau de courte portée (RCP), ledit premier terminal étant apte à être couplé à une carte d'abonné (SIM1) inactive, un terminal pouvant communiquer avec le premier réseau que si la carte associée est active, **caractérisé en ce que** le second terminal comprend,
a. Un module de réception apte à recevoir depuis le second réseau une première demande d'activation issue du premier terminal incluant l'identifiant de la première carte (SIM1),
b. Un module de transmission apte à transmettre une seconde demande d'activation de la première carte, à destination du premier réseau, pour l'activation de la première carte, la première et la deuxième carte d'abonné étant associées au même abonné et étant identifiées par un même identifiant d'appel (MSISDN) au sein du premier réseau de communication.

13. terminal (TRM2) selon la revendication 12, **caractérisé en ce qu'**il comprend un module pour établir une communication avec un serveur suite à la réception d'une demande d'activation.

14. Support de données sur lequel a été mémorisée au moins une série d'instructions de code de programme pour l'exécution d'un procédé selon la revendication 10.

## Patentansprüche

1. Verfahren zur Aktivierung einer Teilnehmerkarte (SIM1), erste Karte genannt, die an ein erstes Endgerät (TRM1) gekoppelt ist, das geeignet ist, mit einem zweiten Endgeräte (TRM2), das an eine aktive zweite Teilnehmerkarte (SIM2) gekoppelt ist, zu kommunizieren, wobei die Endgeräte geeignet sind, mit einem ersten Netzwerk (RES) zu kommunizieren, wobei ein Endgerät mit diesem ersten Netzwerk nur dann kommunizieren kann, wenn die zugehörige Karte aktiv ist, wobei die Endgeräte ferner untereinander über ein zweites Netzwerk kurzer Reichweite (RCP) kommunizieren können, **dadurch gekennzeichnet, dass** es im Bereich des ersten Endgeräts, wenn eine Kommunikation zwischen den zwei Endgeräten über das zweite Netzwerk möglich ist, einen Übertragungsschritt (ET5) einer Aktivierungsanforderung, die von dem zweiten Endgerät eine Aktivierung der ersten Karte über das erste Netzwerk fordert, in Richtung des zweiten Endgeräts über das zweite Netzwerk umfasst, wobei die Anforderung den Identifikator der ersten Karte einschließt, wobei die erste und die zweite Teilnehmerkarte demselben Teilnehmer zugeordnet sind und durch einen selben Rufidentifikator (MSI SDN) innerhalb des ersten Kommunikationsnetzwerks identifiziert werden.

2. Aktivierungsverfahren nach Anspruch 1, **dadurch gekennzeichnet, dass** nach der Kopplung zwischen der ersten Karte und dem ersten Endgerät das erste Endgerät ein für das Vorhandensein einer inaktiven Teilnehmerkarte repräsentatives Signal sendet.

3. Aktivierungsverfahren nach Anspruch 1, **dadurch gekennzeichnet, dass** vor dem Übertragungsschritt (ET5) des Identifikators (IMSI1) zu dem zweiten Endgerät ein Empfangsschritt einer Zustimmung zu der Durchführung der Validierung der Aktivierung von dem zweiten Endgerät erfolgt.

4. Aktivierungsverfahren nach Anspruch 1, **dadurch gekennzeichnet, dass** die zweite Karte (SIM2) einen Identifikator (IMSI2), zweiter Identifikator genannt, speichert, dass die Identifikatoren der ersten und der zweiten Karte vor Aktivierung der ersten Karte überprüft werden.

5. Aktivierungsverfahren nach Anspruch 4, **dadurch gekennzeichnet, dass** die Überprüfung durch ein Prüfmodul des Netzwerks eines Betreibers (OP), der Teilnehmerkarten (SIMI1, SIMI2) verwaltet, durchgeführt wird.

6. Verfahren nach Anspruch 1, **dadurch gekennzeichnet, dass** nach dem Empfang der Aktivierungsanforderung durch das zweite Endgerät das zweite Endgerät eine Verwendung der zweiten Karte (SIM2) verhindert.

7. Computerprogramm (PGM1), das geeignet ist, an einem Endgerät eingesetzt zu werden, wobei das Programm Codeanweisungen umfasst, die, wenn es von einem Prozessor ausgeführt wird, die Schritte des Verfahrens, wie in Anspruch 1 definiert, ausführt.

8. Datenträger, auf dem mindestens eine Reihe von Programmcodeanweisungen für die Ausführung des Verfahrens nach Anspruch 1 gespeichert wurden.

9. Endgerät (TRM1), erstes Endgerät genannt, das geeignet ist, an eine inaktive Teilnehmerkarte (SIM1), erste Karte genannt, gekoppelt zu sein, wobei das Endgerät geeignet ist, mit einem zweiten Endgerät, das an eine aktive zweite Karte (SIM2) gekoppelt ist, zu kommunizieren, wobei die Endgeräte geeignet sind, mit einem ersten Netzwerk (RES) zu kommunizieren, wobei ein Endgerät mit diesem ersten Netzwerk nur dann kommunizieren kann, wenn die zugehörige Karte aktiv ist, wobei die Endgeräte untereinander über ein zweites Netzwerk kurzer Reichweite (RCP) kommunizieren können, **dadurch gekennzeichnet, dass** das Endgerät ein Übertragungsmodul umfasst, das geeignet ist, wenn eine Kommunikation zwischen den zwei Endgeräten möglich ist, eine Aktivierungsanforderung der ersten Karte über das zweite Netzwerk zu übertragen, wobei die Anforderung den Identifikator der ersten Karte einschließt, wobei die Aktivierungsanforderung von dem zweiten Endgerät eine Aktivierung der ersten Karte über das erste Netz fordert, wobei die erste und die zweite Teilnehmerkarte demselben Teilnehmer zugeordnet sind und durch einen selben Rufidentifikator (MSI SDN) innerhalb des ersten Kommunikationsnetzwerks identifiziert werden.

10. Verfahren zur Verwaltung einer Aktivierung einer Teilnehmerkarte (SIM1), erste Karte genannt, die geeignet ist an ein erstes Endgerät (TRM1), erstes Endgerät genannt, gekoppelt zu sein, durch ein zweites Endgerät (TRM2), das geeignet ist, an eine zweite Teilnehmerkarte (SIM2) gekoppelt zu sein, wobei die Endgeräte geeignet sind, mit einem ersten Netzwerk (RES) zu kommunizieren, wobei ein Endgerät mit diesem ersten Netzwerk nur dann kommunizieren kann, wenn die zugehörige Karte aktiv ist, wobei die Kommunikation zwischen den Endgeräten ferner mit Hilfe eines zweiten Netzwerks kurzer Reichweite (RCP) erfolgen kann, **dadurch gekennzeichnet, dass** es im Bereich des zweiten Endgeräts, wenn eine Kommunikation zwischen den zwei Endgeräten möglich ist, umfasst:
a. einen Schritt des Empfangs einer ersten Aktivierungsanforderung von dem zweiten Netzwerk, die von dem ersten Endgerät kommt und den Identifikator der ersten Karte einschließt,
b. einen Schritt der Übertragung einer zweiten Aktivierungsanforderung von der ersten Karte in Richtung des ersten Netzwerks zur Aktivierung der ersten Karte, wobei die erste und die zweite Teilnehmerkarte demselben Teilnehmer zugeordnet sind und durch einen selben Rufidentifikator (MSI SDN) innerhalb des ersten Kommunikationsnetzwerks identifiziert werden.

11. Computerprogramm (PGM2), das geeignet ist, an einem Endgerät eingesetzt zu werden, wobei das Programm Codeanweisungen umfasst, die, wenn es von einem Prozessor ausgeführt wird, die Schritte des Verfahrens, wie in Anspruch 10 definiert, ausführen.

12. Endgerät (TRM2), zweites Endgerät genannt, das geeignet ist, an eine Teilnehmerkarte, zweite Karte genannt, gekoppelt zu sein, wobei das Endgerät ein Kommunikationsmodul umfasst, das geeignet ist, mit einem ersten Netzwerk (RES) und mit einem weiteren Endgerät, erstes Endgerät genannt, über ein zweites Netzwerk kurzer Reichweite (RCP) zu kommunizieren, wobei das erste Endgerät geeignet ist, an eine inaktive Teilnehmerkarte (SIM1) gekoppelt zu sein, wobei das Endgerät mit dem ersten Netzwerk nur dann kommunizieren kann, wenn die zugehörige Karte aktiv ist, **dadurch gekennzeichnet, dass** das zweite Endgerät umfasst:
a. ein Empfangsmodul, das geeignet ist, eine erste Aktivierungsanforderung von dem zweiten Netzwerk zu empfangen, die von dem ersten Endgerät kommt und den Identifikator der ersten Karte (SIM1) einschließt,
b. ein Übertragungsmodul, das geeignet ist, eine zweite Aktivierungsanforderung von der ersten Karte in Richtung des ersten Netzwerks zur Aktivierung der ersten Karte, zu übertragen, wobei die erste und die zweite Teilnehmerkarte demselben Teilnehmer zugeordnet sind und durch einen selben Rufidentifikator (MSI SDN) innerhalb des ersten Kommunikationsnetzwerks identifiziert werden.

13. Endgerät (TRM2) nach Anspruch 12, **dadurch gekennzeichnet, dass** es ein Modul umfasst, um eine Kommunikation mit einem Server nach dem Empfang einer Aktivierungsanforderung herzustellen.

14. Datenträger, auf dem mindestens eine Reihe von Programmcodeanweisungen für die Ausführung eines Verfahrens nach Anspruch 10 gespeichert ist.

## Claims

1. Method for activating a subscriber card (SIM1), called the first card, coupled to a first terminal (TRM1) able to communicate with a second terminal (TRM2) coupled to a second active subscriber card (SIM2), the terminals being able to communicate with a first network (NET), a terminal being able to communicate with this first network only if the associated card is active, the terminals being able furthermore to communicate with one another via a second short-range network (SRN), **characterized in that** it comprises at the level of the first terminal, when a communication is possible between the two terminals via the second network, a step of transmitting (ET5) to the second terminal via the second network an activation requesting the second terminal to activate the first card via the first network, the request including the identifier of the first card, the first and the second subscriber cards being associated with the same subscriber and being identified by one and the same call identifier (MSI SDN) within the first communication network.

2. Activation method according to Claim 1, **characterized in that**, following the coupling between the first card and the first terminal, the first terminal emits a signal representative of the existence of an inactive subscriber card.

3. Activation method according to Claim 1, **characterized in that** the step (ET5) of transmitting the identifier (IMSI1) to the second terminal is preceded by a step of receiving from the second terminal an agreement for the implementation of the validation of the activation.

4. Activation method according to Claim 1, **characterized in that** the second card (SIM2) stores an identifier (IMSI2), called the second identifier, **in that** the identifiers of the first and of the second card are verified before activation of the first card.

5. Activation method according to Claim 4, **characterized in that** the verification is performed by a verification module of the network of a manager operator (OP) dealing with the subscriber cards (SIM1,SIM2).

6. Method according to Claim 1, **characterized in that**, following reception of the request for activation by the second terminal, the second terminal prevents use of the second card (SIM2).

7. Computer program (PGM1) able to be implemented on a terminal, the program comprising code instructions which, when it is executed by a processor, carries out the steps of the method defined in Claim 1.

8. Data medium on which at least one series of program code instructions for the execution of a method according to Claim 1 has been stored.

9. Terminal (TRM1), called the first terminal, able to be coupled to an inactive subscriber card (SIM1), called the first card, the terminal being able to communicate with a second terminal coupled to a second active subscriber card (SIM2), the terminals being able to communicate with a first network (NET1), a terminal being able to communicate with this first network only if the associated card is active, the communication between the terminals being able to be performed by way of a second short-range network (SRN), **characterized in that** the terminal comprises a transmission module able to transmit, when a communication is possible between the terminals, a request for activation of the first card via the second network, the request including the identifier of the first card, the activation request requesting the second terminal to activate the first card via the first network, the first and the second subscriber cards being associated with the same subscriber and being identified by one and the same call identifier (MSI SDN) within the first communication network.

10. Method for managing an activation of a subscriber card (SIM1), called the first card, able to be coupled to a first terminal (TRM1), called the first terminal, by a second terminal (TRM2) able to be coupled to a second subscriber card (SIM2), the terminals being able to communicate with a first network (NET), a terminal being able to communicate with this first network only if the associated card is active, the communication between the terminals being able to be performed furthermore by way of a second short-range network (SRN), **characterized in that** it comprises at the level of the second terminal, when a communication is possible between the two terminals,
a. a step of receiving from the second network a first request for activation arising from the first terminal including the identifier of the first card,
b. a step of transmitting a second request for activation of the first card, to the first network, for the activation of the first card, the first and the second subscriber cards being associated with the same subscriber and being identified by one and the same call identifier (MSI SDN) within the first communication network.

11. Computer program (PGM2) able to be implemented on a terminal, the program comprising code instructions which, when it is executed by a processor, carries out the steps of the method defined in Claim 10.

12. Terminal (TRM2), called the second terminal, able to be coupled to a subscriber card, called the second card, the terminal comprising a communication module able to communicate with a first network (NET), and with another terminal, called the first terminal, by way of a second short-range network (SRN), said first terminal being able to be coupled to an inactive subscriber card (SIM1), a terminal being able to communicate with the first network only if the associated card is active, **characterized in that** the second terminal comprises,
a. A reception module able to receive from the second network a first request for activation arising from the first terminal including the identifier of the first card (SIM1),
b. A transmission module able to transmit a second request for activation of the first card, to the first network, for the activation of the first card, the first and the second subscriber cards being associated with the same subscriber and being identified by one and the same call identifier (MSI SDN) within the first communication network.

13. Terminal (TRM2) according to Claim 12, **characterized in that** it comprises a module for establishing a communication with a server following reception of a request for activation.

14. Data medium on which at least one series of program code instructions for the execution of a method according to Claim 10 has been stored.
